# EUROPÄISCHE PATENTANMELDUNG

(11) **EP 4 019 359 A1**
(43) Veröffentlichungstag der Anmeldung: **29.06.2022**
(21) Anmeldenummer: 21216790.2
(22) Anmeldetag: 22.12.2021
(51) Int. Cl.: B61B 3/02, B61C 13/04

(54) **HÄNGEBAHNSYSTEM ZUM TRANSPORTIEREN VON WERKSTÜCKEN**

(30) Priorität: 23.12.2020 DE 102020134908
(71) Anmelder: pentanova cs GmbH, 71032 Böblingen (DE)
(72) Erfinder: Quenzer, Philipp, 71706 Markgröningen (DE); Gawelczyk, Klaus, 72766 Reutlingen (DE); Kirchner, Marc Walter, 69245 Bammental (DE); Wäder, Martin, 71093 Weil im Schönbuch (DE)
(74) Vertreter: Ostertag & Partner Patentanwälte mbB

(57) **Zusammenfassung**

Die Erfindung betrifft ein Hängebahnsystem zum Transportieren von Werkstücken, mit zumindest zwei schienengeführten Fahrwerken, wobei zumindest zwei Fahrwerke über eine Lasttraverse zu einem Transportwagen verbunden sind, die Lasttraverse zur Aufnahme von Werkstücken ausgelegt ist und sich im Wesentlichen entlang einer Förderrichtung erstreckt, jedes Fahrwerk zumindest eine Laufrolle aufweist, zumindest eine der Laufrollen des Transportwagens antreibbar ist, für jede antreibbare Laufrolle ein eigener Elektromotor an dem Fahrwerk angebracht ist und der Transportwagen einen Energiespeicher für den Antrieb der antreibbaren Laufrollen aufweist.

## Beschreibung

### HINTERGRUND DER ERFINDUNG

### 1. Gebiet der Erfindung

Die Erfindung betrifft ein Hängebahnsystem zum Transportieren von Werkstücken mit zumindest zwei schienengeführten Fahrwerken, wobei zumindest zwei Fahrwerke über eine Lasttraverse zu einem Transportwagen verbunden sind, die Lasttraverse zur Aufnahme von Werkstücken ausgelegt ist und sich im Wesentlichen entlang einer Förderrichtung erstreckt und jedes Fahrwerk zumindest eine Laufrolle aufweist.

### 2. Beschreibung des Standes der Technik

Hängebahnsysteme der eingangs genannten Art dienen häufig dem Transport von Werkstücken wie beispielsweise Rädern, Karosserieteilen oder ähnlichem in Fertigungshallen. Die Auslegung des Hängebahnsystems hinsichtlich der zu fördernden Lasten, der dafür notwendigen Antriebsleistungen der einzelnen Transportwagen sowie der Verlauf dafür notwendige(n) Tragschiene(n) wird dabei in der Regel bei Errichten der Fertigungshalle festgelegt und ist nachträglich bei den herkömmlichen Systemen nicht oder nur unter großem Aufwand änderbar oder anpassbar.

### ZUSAMMENFASSUNG DER ERFINDUNG

Es ist eine Aufgabe der Erfindung, ein Hängebahnsystem der eingangs genannten Art anzugeben, das die genannten Nachteile vermeidet und insbesondere eine Anpassungsmöglichkeit an sich verändernde Lasten und die damit verbundenen geringeren oder höheren Antriebsleistungen ermöglicht. Auch ist eine leichtere Anpassbarkeit an eine veränderte Streckenführung oder eine Vergrößerung oder Verkleinerung der Gesamtstreckenlänge eines solchen Hängebahnsystems wünschenswert.

Die Erfindung wird durch ein Hängebahnsystem nach dem unabhängigen Anspruch 1 gelöst. Weitere Ausgestaltungen der Erfindung sind in den abhängigen Ansprüchen angegeben.

Das erfindungsgemäße Hängebahnsystem dient dem Transportieren von Werkstücken, insbesondere für Werkstücke mit einem maximalen Gewicht von 400 kg. Es umfasst zumindest zwei schienengeführte Fahrwerke. Zumindest zwei Fahrwerke sind über eine Lasttraverse zu einem Transportwagen verbunden. Die Lasttraverse ist zur Aufnahme von Werkstücken ausgelegt und erstreckt sich im Wesentlichen entlang einer Förderrichtung. An der Lasttraverse sind zumindest zwei Fahrwerke angebracht.

Jedes der Fahrwerke weist zumindest eine Laufrolle auf. Bevorzugt weist jedes Fahrwerk zwei Laufrollen auf, die hinsichtlich der Laufrichtung einander gegenüberliegend angeordnet sind.

Zumindest eine der Laufrollen des Transportwagens ist antreibbar. Für jede antreibbare Laufrolle ist ein eigener Elektromotor an dem Fahrwerk angebracht.

Des Weiteren weist der Transportwagen einen Energiespeicher für den Antrieb der antreibbaren Laufrollen auf.

Insgesamt ergibt sich so ein Hängebahnsystem, bei dem die Anzahl an antreibbaren Laufrollen je nach Leistungsanforderung an den einzelnen Transportwagen einfach konfigurierbar ist. Dadurch, dass für jede antreibbare Laufrolle ein eigener Elektromotor vorgesehen ist, kann zur Erhöhung der generellen Leistungsabgabe des jeweiligen Transportwagens eine passive Laufrolle durch eine antreibbare Laufrolle ersetzt werden. Dieser modulare Ansatz erleichtert eine nachträgliche Anpassung, d.h. nach der erstmaligen Errichtung des Hängebahnsystems, an sich verändernde Anforderungen hinsichtlich der zu fördernden Lasten auf einfache und kostengünstige Weise.

Gleichzeitig werden durch das Vorhandensein eines Energiespeichers am Transportwagen die erstmalige Errichtung des Streckensystems sowie nachträgliche Veränderungen daran zur Anpassung an sich verändernde Anforderungen deutlich erleichtert. Es ist nicht notwendig, den gesamten Streckenverlauf durchgängig zu elektrifizieren. Vielmehr können lediglich an bestimmten Punkten oder Abschnitten entlang der Strecke Lade- oder Austauschmöglichkeiten für den Energiespeicher vorgesehen sein, so dass lediglich punkt- oder abschnittsweise eine entsprechende Versorgung mit Elektrizität beziehungsweise entsprechende Anschlüsse vorhanden sein müssen.

Die maximale Geschwindigkeit solcher Transportwagen kann beispielsweise bei 60 m/min liegen, sie können eine Nutzlast von bis zu 300 kg befördern bei beispielsweise zwei angetriebenen Laufrollen.

Bei einer vorteilhaften Ausführungsform ist vorgesehen, dass der Energiespeicher ein elektrischer Energiespeicher ist. Beispielsweise kann es sich bei dem elektrischen Energiespeicher um einen Akku beziehungsweise eine Batterie handeln. An den erwähnten Lade- oder Austauschpunkten oder Lade- oder Austauschabschnitten entlang der Strecke kann vorgesehen sein, dass der Akku oder die Batterie mittels geeigneter Ladetechniken aufgeladen oder ausgetauscht werden kann.

Es kann für den Ladevorgang beispielsweise ein induktive Übertragung der elektrischen Energie auf den Energiespeicher erfolgen, was den Vorteil hat, dass der Ladevorgang berührungslos erfolgen kann.

Alternativ kann für den Ladevorgang entlang einer bestimmten Strecke oder an bestimmten Stellen an der Strecke eine Übertragung elektrischer Energie über Schleifkontakte oder ähnliches erfolgen.

Ebenfalls alternativ oder zusätzlich kann vorgesehen sein, dass der Energiespeicher an sich austauschbar angebracht und ausgelegt ist. Beispielsweise kann an bestimmten Punkten entlang der Strecke oder zu bestimmten Zeiten ein Austausch der Energiespeicher routinemäßig oder in Abhängigkeit vom Füll- bzw. Ladezustand des Energiespeichers vorgesehen sein.

Bei einer Weiterbildung der Erfindung ist vorgesehen, dass der Transportwagen eine Steuerung für den Antrieb der antreibbaren Laufrollen und/oder Sensoren für das Erkennen eines vorausfahrenden oder nachfolgenden Transportwagens, eines Halts oder dergleichen aufweist. Die Steuerung kann so ausgelegt sein, dass sie bei einer Hinzunahme einer weiteren antreibbaren Laufrolle oder bei der Wegnahme einer solchen bei einem Transportwagen die entsprechende Ansteuerung und Koordinierung der Antriebsgeschwindigkeiten und Drehmomente für das Erreichen eines bestimmten erwünschten Bewegungsmusters des Transportwagens übernimmt. So erfolgt beispielsweise bei Kurvenfahrten bei dem Vorhandensein von zwei oder mehr angetriebenen Laufrollen eine gemeinsame Ansteuerung der Laufrollen aufgrund unterschiedlicher Laufwege der unterschiedlichen Laufrollen. Diese Ansteuerung übernimmt die Steuerung, sobald sie den entsprechenden Bedarf hierfür erkennt.

In diesem Zusammenhang kann vorgesehen sein, dass die Steuerung mit den Sensoren verbunden ist und dazu ausgelegt ist, unter Einbeziehung eines Signals der Sensoren eine Ansteuerung der antreibbaren Laufrollen vorzunehmen. Beispielsweise kann die Steuerung dazu ausgelegt sein, dass sie je nach Vorhandensein einer oder mehrerer antreibbarer Laufrollen das von den Sensoren - die beispielsweise an dem Transportwage angebracht sind - gelieferte Signal unterschiedlich bewertet und entsprechend eine angepasste Ansteuerung der Antriebe vornimmt.

Konkret kann bei einer Ausführungsform vorgesehen sein, dass der Elektromotor über die Steuerung separat ansteuerbar ist.

Bei einer Weiterentwicklung der Erfindung kann vorgesehen sein, dass die Verbindung zwischen Fahrwerk und Lasttraverse so ausgestaltet ist, dass sie mit einfachem Werkzeug oder/und werkzeuglos lösbar ist und ein Auswechseln eines antreibbaren Fahrwerks gegen ein passives, nicht antreibbares Fahrwerk durch Lösen der Verbindung zwischen Fahrwerk und Lasttraverse möglich ist. Das Lösen mit einfachen Werkzeug oder das werkzeuglose Lösen kann beispielsweise durch Schraub-, Steck- oder Klemmverbindungen realisiert werden. Nicht unter diese Kategorie würden beispielsweise Schweißverbindungen oder solche Verbindungen fallen, die nur mit hohem Aufwand wie beispielsweise Erhitzen oder unter hoher Belastung der verbundenen Teile wie beispielsweise Sägen oder Trennschleifen lösbar sind. Es wird so ein modularer Aufbau realisiert, der es ermöglicht, dass zwei Arten von Modulen für die Fahrwerke an der entsprechenden Einbaustelle an der Lasttraverse anbringbar sind. Eine Art von Modul bilden die antreibbaren Fahrwerke, die andere Art von Modul bilden die passiven, nicht antreibbaren Fahrwerke. Diese können je nach Bedarf gegeneinander ausgetauscht werden. Auf diese Weise kann beispielsweise die Gesamtantriebsleistung des Transportwagens verändert werden, wenn die antreibbaren Fahrwerke jeweils die gleiche Antriebsleistung aufweisen. Es können aber auch andere Parameter wie beispielsweise die Steigungsfähigkeit, die Tragfähigkeit, die Effizienz oder andere Parameter des Transportwagens auf diese Weise veränderbar sein.

Bei einer Weiterbildung der Erfindung kann vorgesehen sein, dass Lasttraverse und Fahrwerk derart modular aufgebaut sind, dass die Lasttraverse ein mechanisches und ein elektrisches Kontaktelement und ein antreibbares Fahrwerk ein dazu passendes mechanisches und ein passendes elektrisches Kontaktelement aufweisen. Auf diese Weise kann ein einfacher Austausch von einem antreibbaren Fahrwerk gegen ein passives Fahrwerk und umgekehrt vorgenommen werden. Dabei kann vorgesehen sein, dass ein passives Fahrwerk entsprechend nur ein mechanisches Kontaktelement aufweist. Dabei kann je nach ausführungsform vorgesehen sein, dass mehr als ein elektrisches Kontaktelement vorgesehen ist. Beispielsweise können zwei separate Kotaktelemente oder Stecker vorgesehen sein, einer für signalübertragende Leitungen und ein weiterer für energieübertragende Leitungen.

Bei einer konkreten Ausführungsform kann vorgesehen sein, dass bei einem Transportwagen, der eine Lasttraverse und zumindest zwei Fahrwerke mit je zwei Laufrollen aufweist, eine, zwei, drei oder vier passive Laufrollen gegen antreibbare Laufrollen oder umgekehrt auswechselbar sind.

In diesem Zusammenhang kann bei einer Ausführungsform das Hängebahnsystem einen I- bzw, Doppel-T-Profil-Träger als Lauf- und Tragschiene aufweisen, wobei die Fahrwerke als Innenläufer ausgebildet sind. Dabei kann beispielsweise bei einem Fahrwerk mit zwei Laufrollen eine erste Laufrolle auf einer Seite des Profil-Trägers und eine zweite Rolle auf der gegenüberliegenden Seite des Profil-Trägers angeordnet sein.

Bei einer weiteren Ausführungsform kann vorgesehen sein, dass das Hängebahnsystem zusätzlich eine Photovoltaikanlage umfasst, wobei der von der Photovoltaikanlage erzeugte Gleichstrom direkt ohne Gleichrichtung in das Hängebahnsystem eingespeist wird. Bei einer Ausgestaltung dieser Ausführungsform ist ein Zwischenspeicher zur Speicherung der von der Photovoltaikanlage erzeugten Energie vor der Weitergabe an das Hängebahnsystem vorgesehen.

Dies ermöglicht einerseits eine umweltschonende Aufladung von batteriebetriebenen Transportwagen, Andererseits werden Gleichrichterverluste vermieden.

Die Aufgabe wird auch durch einen Transportwagen für ein Hängebahnsystem wie vorstehend beschrieben gelöst.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine perspektivische Ansicht eines Abschnitts eines Hängebahnsystems einer ersten Ausführungsform;
- Figur 2: eine Rückansicht des Hängebahnsystems der Figur 1;
- Figur 3: eine Seitenansicht des Hängebahnsystems der Figur 1;
- Figur 4: eine Untenansicht des Hängebahnsystems der Figur 1;
- Figur 5: eine perspektivische Detailansicht einer zweiten Ausführungsform;
- Figur 6: eine perspektivische Detailansicht der zweiten Ausführungsform; und
- Figur 7: eine schematische Ansicht einer dritten Ausführungsform.

### BESCHREIBUNG BEVORZUGTER AUSFÜHRUNGSBEISPIELE

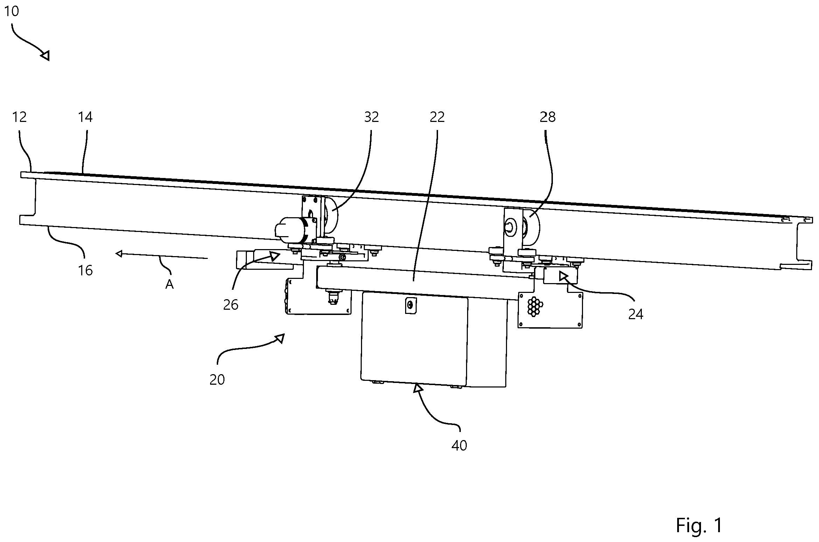

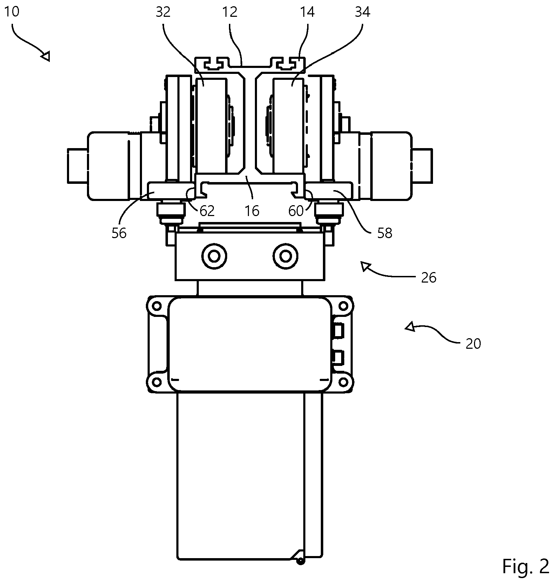

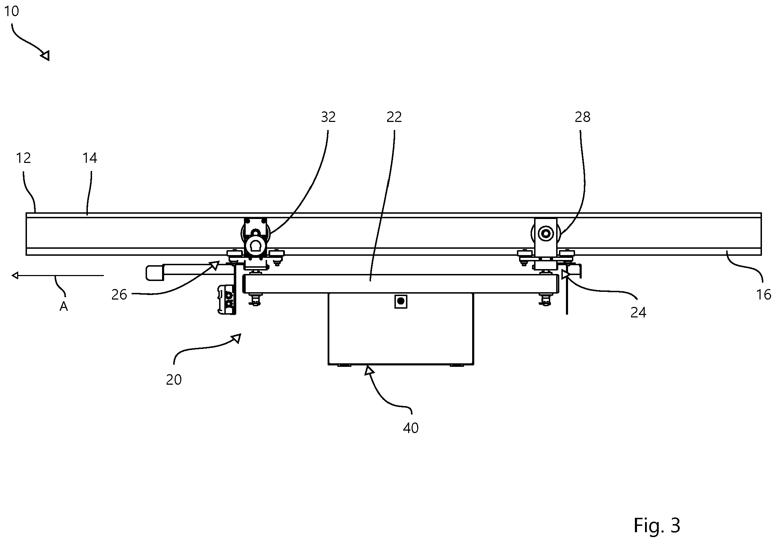

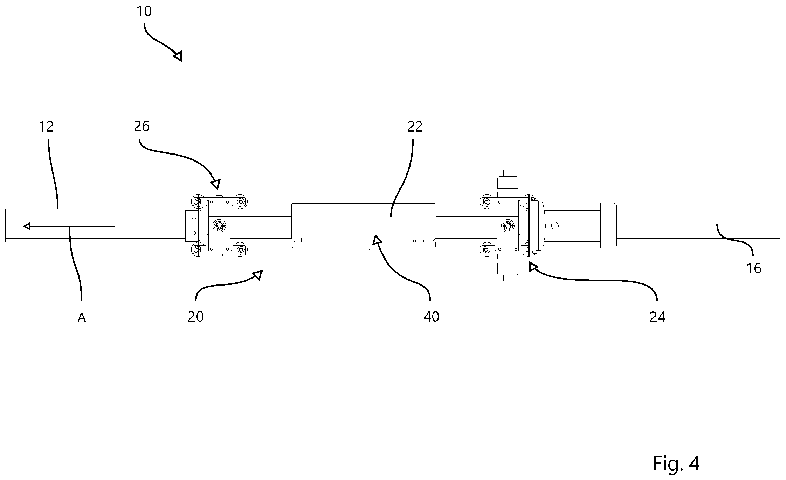

Nachfolgend wird eine erste Ausführungsform anhand der Figuren 1-4 erläutert. Figur 1 veranschaulicht eine perspektivischen Ansicht einen Abschnitt eines Hängebahnsystems 10. Die Figuren 2-4 sind eine Rückansicht, eine Seitenansicht und eine Untenansicht desselben Hängebahnsystems 10. Das Hängebahnsystem 10 dient der Förderung von Lasten wie beispielsweise Werkstücken (nicht abgebildet) im industriellen Umfeld und umfasst in der gezeigten ersten Ausführungsform eine Tragschiene 12.

Die Tagschiene 12 ist im Profil I-förmig. Der Oberflansch 14 der Tragschiene 12 kann beispielsweise zur Befestigung der Tragschiene 12 an einem Dach einer Fertigungshalle oder an einem geeigneten Gestänge dienen. Der Unterflansch 16 der Tragschiene 12 dient als Abrollfläche für Fahrwerke.

Das Hängebahnsystem 10 umfasst ferner einen oder mehrere Transportwagen 20. Der Transportwagen 20 weist zwei mit einer Lasttraverse 22 verbundene Fahrwerke 24, 26 auf. Das erste Fahrwerk 24 weist zwei passive Laufrollen (in den Figuren ist nur eine Laufrolle 28 gezeigt) und das zweite Fahrwerk 26 weist zwei antreibbare Laufrollen 32, 34 auf. Der Transportwagen 20 ist für eine Förderung in eine Bewegungsrichtung A entlang der Tragschiene 12 ausgelegt. Entsprechend ist das erste Fahrwerk 24 als hinteres Fahrwerk und das zweite Fahrwerk 26 als vorderes Fahrwerk angeordnet.

An der Lasttraverse 22 ist eine Steuereinheit 40 angebracht, die neben der Steuerungsfunktionalität auch einen Energiespeicher aufweist. In der vorliegenden Ausführungsform befindet sich die Steuereinheit 40 unterhalb der Lasttraverse 22. Selbstverständlich andere Ausführungsformen möglich, bei denen die Steuereinheit 40 stärker in die Lasttraverse 22 integriert ist.

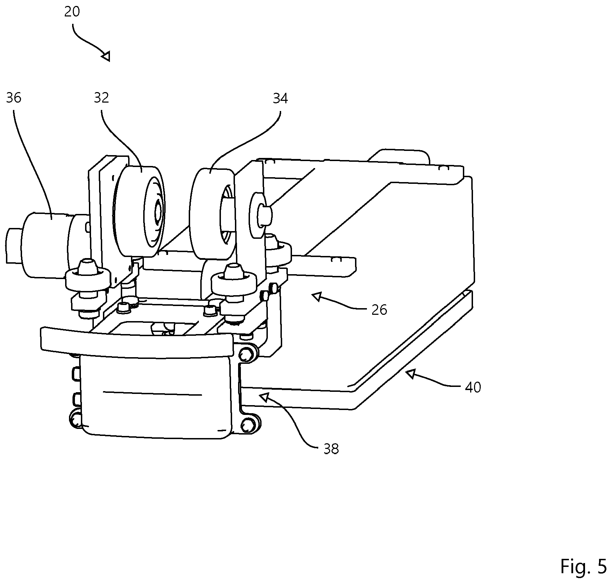

Figur 5 veranschaulicht eine solche Ausführungsform, bei der eine stärkere Integration von Lasttraverse 22 und Steuereinheit 40 realisiert ist. Es werden aufgrund der hohen Ähnlichkeit zu der vorhergehend beschriebenen Ausführungsform die gleichen Bezugszeichen verwendet und die zugehörigen Merkmale nicht nochmals gesondert erläutert.

Die in der Figur 5 gezeigte Ausführungsform zeigt einen Transportwagen 20, der ohne Tragschiene und nur mit einem Fahrwerk 26 gezeigt ist, um die Lage der Laufrollen 32, 34 und weitere andere Details besser darzustellen. Bei dieser Ausführungsform ist zunächst nur ein einziger Antrieb der Laufrolle 32 vorgesehen und die Lasttraverse 22 verläuft durch die Steuereinheit 40. Der hintere Teil der Lasttraverse 22 sowie das daran befestigte Laufwerk 24 sind aus Gründen der Übersichtlichkeit werggelassen.

Die Laufrollen 32, 34 laufen, wie bereits erwähnt, auf der Oberseite des Unterflansches einer Tragschiene, die im Profil beispielsweise I-förmig sein kann. Damit können die Laufrollen 32, 34 und das zugehörige Fahrwerk 26 als Innenläufer bezeichnet werden.

Die Laufrollen 32, 34 sind derart gelagert, dass die Achsen, um die sich die Laufrollen 32, 34 drehen, im Wesentlichen horizontal verlaufen. Im Wesentlichen bedeutet hier, dass die Laufflächen der Laufrollen 32, 34 parallel auf den Laufflächen des Unterflansches abrollen. Es kann beispielsweise vorgesehen sein, dass die Laufflächen des Unterflansches nicht exakt parallel zu der eigentlichen Ausrichtung des Unterflansches verlaufen, sondern eine leichte Neigung von bis zu 10° besitzen. Die Neigung kann dabei so verlaufen, dass die Laufflächen an der mittigen Befestigung des Unterflansches relativ zu einer horizontalen Aufhängung höher sind als die Außenränder. Eine derartige Neigung kann beispielsweise durch eine entsprechende Verkippung der Laufradachsen kompensiert werden.

Bei dem in Figur 5 gezeigten Fahrwerk 26 ist eine Laufrolle 32 angetrieben und die andere Laufrolle 34 ist passiv, d.h. sie weist keinen eigenen Antrieb auf. Für den Antrieb ist die Laufrolle 32 mit einem Elektromotor 36 angetrieben. Der Elektromotor ist mit der Steuereinheit 40 verbunden und wird von dort gespeist und gesteuert.

In dem vorderen Bereich des Transportwagens 20 befindet sich ein Sensormodul 38, das dem Erkennen eines vorausfahrenden Fahrzeugs oder eines Hindernisses dient. Das Sensormodul 38 ist mit der Steuereinheit 40 verbunden.

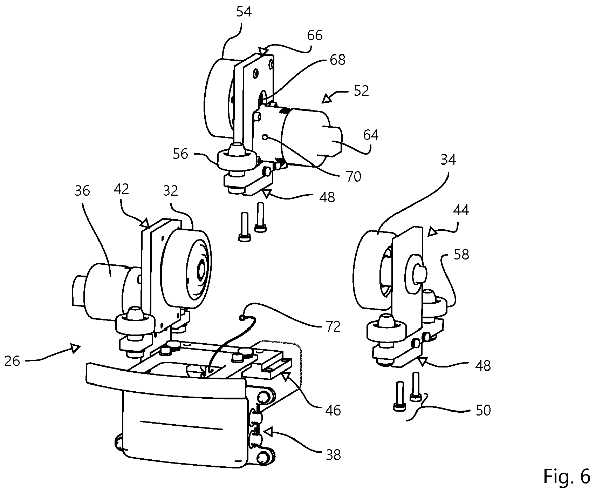

Jedes der Fahrwerke 24, 26 ist zweigeteilt und weist zwei separat voneinander konfigurierbare Radmodule auf. Dies ist in Figur 6 besonders anschaulich dargestellt. Bei der in Figur 6 gezeigten Ausführungsform ist nur der vordere Teil der Lasttraverse 22 mit dem Fahrwerk 26 wie in Figur 5 gezeigt dargestellt, der hintere Teil wurde aus Gründen der Übersichtlichkeit weggelassen.

Das Fahrwerk 26 weist ein erstes antreibbares Radmodul 42 mit der Laufrolle 32 und ein zweites passives Radmodul 44 mit der Laufrolle 34 auf. Bei der in Figur 6 gezeigten Anordnung wurde das passive Radmodul 44 mit der Laufrolle 34 von der Lasttraverse 22 gelöst. Sowohl die Lasttraverse 22 als auch das Radmodul 44 weisen einen zueinander passenden mechanischen Kontaktbereich auf: Die Lasttraverse 22 besitzt einen Kontaktbereich 46, an den der entsprechende Kontaktbereich 48 des Radmoduls 44 angebracht werden kann. Für die betriebsmäßige Verbindung von Radmodul 44 und Lasttraverse 22 sind Verbindungselemente 50 in Form von Schrauben vorgesehen. Diese stellen eine einfach herstellbare und wieder zerstörungsfrei lösbare mechanische Verbindung zwischen dem Kontaktbereich 46 der Lasttraverse 22 und dem mechanischen Kontaktbereich 48 des Radmoduls 44 her. Alternative Verbindungsmittel für eine solche Verbindung wären beispielsweise Rastverbindungen oder ähnliches.

In der Figur 6 ist ein Wechsel zwischen zwei Radmodulen veranschaulicht. Das bislang an der Lasttraverse 22 beziehungsweise dem Transportwagen 20 angebrachte Radmodul 44 ist bereits demontiert, d.h. die mechanische Verbindung zwischen dem Transportwagen 20 und dem mit einem passiven Laufrad versehenen Radmodul 44 ist gelöst. Gleichzeitig ist ein Radmodul 52 mit einem antreibbaren Laufrad 54 dargestellt, das nun statt dem Radmodul 44 mit dem passiven Laufrad 34 angebracht werden kann. Dazu kann wiederum eine mechanische Verbindung in der bereits beschriebenen Weise hergestellt werden.

Die Radmodule 42, 44, 52 besitzen neben den Laufrädern 32, 34, 54, die als Laufräder dem Abtragen des Gewichts des Transportwagens 20 auf die Tragschiene 12 dienen, auch Führungsrollen 56, 58. Diese liegen seitlich am Unterflansch 16 an entsprechenden Laufflächen 60, 62 an. Diese dienen der Führung und Stabilisierung des Laufs des Transportwagens 20.

Das Radmodul 52 weist für die antreibbare Laufrolle 54 einen Elektromotor 64 auf. In der vorliegend gezeigten Ausführungsform sind die Antriebsachse des Elektromotors 64 und die Drehachse des Laufrads 54 zueinander versetzt. Ein entsprechendes Getriebe (nicht abgebildet) verbindet den Elektromotor 46 und das Laufrad 54. Alternativ könnte auch vorgesehen sein, dass der Elektromotor 64 direkt die Achse des Laufrads 54 antreibt.

Die Radmodule 42, 44, 52 weisen einen quaderförmigen Grundkörper 66 auf, der sich in seiner Längserstreckung senkrecht zur Laufrichtung des Transportwagens 20 im Wesentlichen in Richtung der Gewichtskraft erstreckt. In diesen quaderförmigen Grundkörper ist auf der oberen Seite ein Lager 68 für die Laufrolle 54 angebracht - beispielsweise eingepresst. Das Lager 68 legt die Richtung der Drehachse des Laufrads 54 fest, welche im Wesentlichen senkrecht zur Längserstreckung des quaderförmigen Grundkörpers 66 verläuft. An der dem Lager 68 abgewandten Seite des Grundkörpers 66 verlaufen in Richtung der Längserstreckung Bohrungen, in welche die Verbindungselemente 50 in den Grundkörper 66 eingebracht und dort verankert werden können. Beispielsweise können die Bohrungen ein Innengewinde aufweisen, in welches die Verbindungselement 50 in Form von Schrauben eingedreht werden können.

Ebenfalls an dem Ende des Grundkörpers 66, das dem Lager 68 abgewandt ist, sind die Führungsrollen 56, 58 angeordnet.

Das Laufrad 54 eines Radmoduls erstreckt sich auf einer Seite des Grundkörpers 66 in Richtung der Tragschiene 12. Im Falle eines Radmoduls mit einer angetriebenen Laufrolle - beispielsweise das in Figur 6 dargestellt Radmodul 52 - befindet sich auf der gegenüberliegenden Seite, als der von der Tragschiene 12 abgewandten Seite, der Elektromotor 64. Damit nimmt er keinen Raum in Richtung Tragschiene 12 ein und ein passives Radmodul kann einfach gegen ein angetriebenes Radmodul ausgetauscht werden.

Bei der in Figur 6 gezeigten Ausführungsform ist für den Anschluss des Radmoduls 52 am Elektromotor eine Steckerbuchse 70 angebracht. Die Steckerbuchse kann sowohl für die Übertragung von Signalen als auch für die Übertragung von elektrischer Energie auf das Radmodul 52 verwendet werden. Dazu ist bei der Ausführungsform vorgesehen, dass die Steckerbuchse 70 mit einem Stecker 72 kontaktiert wird und dann mit der Steuereinrichtung 40 verbunden ist.

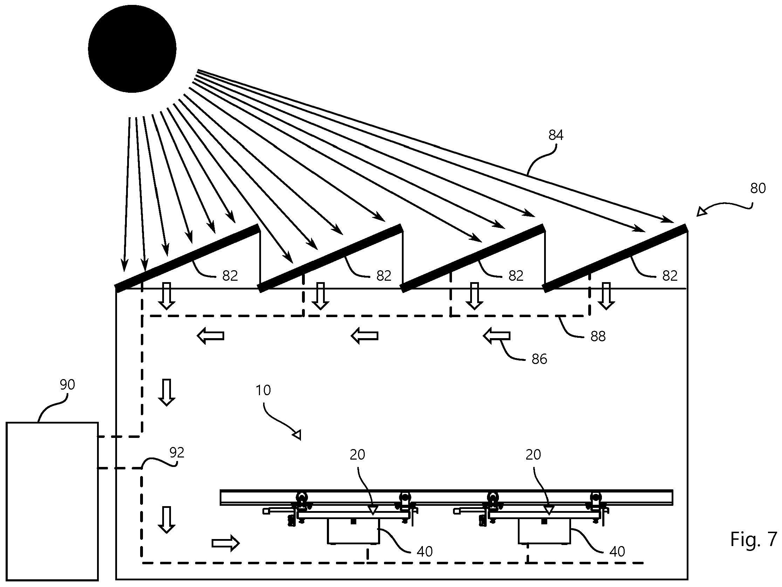

Bei der in Figur 7 gezeigten Ausführungsform ist ein Hängebahnsystem 10 wie vorstehend beschrieben dargestellt, das zusätzlich eine Photovoltaikanlage 80 aufweist. Die Photovoltaikanlage umfasst einzelne Paneele 82 mit Solarzellen, die einen Teil der Sonnenstrahlung 84 in elektrische Energie 86 umwandeln. Diese elektrische Energie - durch Pfeile symbolisiert - wird über Leitungen 88 (zur besseren Unterscheidung gestrichelt dargestellt) einen Zwischen- oder Pufferspeicher 90 zugeführt. Dort kann ein Load-Balancing durchgeführt werden. Je nach Energieanforderung des Energieversorgungssystems 92 des eigentlichen Hängebahnsystems 10 kann Energie dem Speicher 90 entnommen werden und dem Hängebahnsystem 10 zugeführt werden, beispielsweise zum Aufladen der einzelnen Transportwagen 20 bzw. deren Energiespeicher 40. Wird momentan keine elektrische Energie in dem Hängebahnsystem benötigt, kann diese in dem Speicher 90 zwischengespeichert werden.

In anderen Worten betrifft die Erfindung auch eine leichte Elektrohängebahn mit einem oberhalb des Bodenniveaus verlaufenden Schienensystem, das beispielsweise von der Decke abgehängt sein kann, mindestens einem auf dem Schienensystem verfahrbaren Elektrohängebahnwagen, welcher einen Vorläufer und einen Nachläufer aufweist, mindestens ein Fahrwerk aufweist, welches mindestens eine von einem Elektromotor angetriebene, auf der Innenseite des Schienenprofils abrollende Tragrolle aufweist, wobei die Anzahl der angetriebenen Rollen zur Variierung der Nutzlast modular anpassbar ist. Die vom Elektromotor angetriebene Tragrolle kann an Vorläufer und Nachläufer beliebig angeordnet werden.

Des Weiteren umfasst der Elektrohängebahnwagen an Vorläufer und Nachläufer beidseitig montierte einstellbare Führungsrollen zur Beibehaltung der Spur, sowie eine Traverse, welche Vorläufer und Nachläufer miteinander verbindet, welche die Steuerungstechnik sowie die Batterie zur Stromversorgung der elektrischen Komponenten außerhalb der Aufladestationen beinhaltet.

## Patentansprüche

1. Hängebahnsystem (10) zum Transportieren von Werkstücken, mit
a) zumindest zwei schienengeführten Fahrwerken (24, 26), wobei
b) zumindest zwei Fahrwerke (24, 26) über eine Lasttraverse (22) zu einem Transportwagen (20) verbunden sind,
c) die Lasttraverse (22) zur Aufnahme von Werkstücken ausgelegt ist und sich im Wesentlichen entlang einer Förderrichtung (A) erstreckt,
d) jedes Fahrwerk (24, 26) zumindest eine Laufrolle (28-32) aufweist,
e) zumindest eine der Laufrollen (32) des Transportwagens (20) antreibbar ist,
f) für jede antreibbare Laufrolle (32) ein eigener Elektromotor (36) an dem Fahrwerk (26) angebracht ist und
g) der Transportwagen (20) einen Energiespeicher (40) für den Antrieb der antreibbaren Laufrollen (32) aufweist.

2. Hängebahnsystem nach Anspruch 1, wobei der Energiespeicher ein elektrischer Energiespeicher (40) ist.

3. Hängebahnsystem nach einem der vorhergehenden Ansprüche, wobei der Transportwagen (20) eine Steuerung (40) für den Antrieb der antreibbaren Laufrollen (32) und/oder Sensoren (38) für das Erkennen eines vorausfahrenden oder nachfolgenden Transportwagens (20), eines Halts oder dergleichen aufweist.

4. Hängebahnsystem nach Anspruch 3, wobei die Steuerung (40) mit den Sensoren (38) verbunden ist und dazu ausgelegt ist, unter Einbeziehung eines Signals der Sensoren (38) eine Ansteuerung der antreibbaren Laufrollen (32) vorzunehmen.

5. Hängebahnsystem nach einem der Ansprüche 3 oder 4, wobei der Elektromotor (36) über die Steuerung (40) separat ansteuerbar ist.

6. Hängebahnsystem nach einem der vorhergehenden Ansprüche, wobei die Verbindung zwischen Fahrwerk (24, 26) und Lasttraverse (22) so ausgestaltet ist, dass sie mit einfachem Werkzeug oder/und werkzeuglos lösbar ist und ein Auswechseln eines antreibbaren Fahrwerks gegen ein passives, nicht antreibbares Fahrwerk durch Lösen der Verbindung zwischen Fahrwerk und Lasttraverse möglich ist.

7. Hängebahnsystem nach Anspruch 6, wobei Lasttraverse (22) und Fahrwerk (24, 26) derart modular aufgebaut sind, dass die Lasttraverse (22) einen mechanischen Kontaktbereich (46) und ein elektrisches Kontaktelement (72) aufweist und ein antreibbares Fahrwerk (52) einen zu dem mechanischen Kontaktbereich (46) passenden mechanischen Kontaktbereich (48) und ein zu dem elektrischen Kontaktelement (72) passendes elektrisches Kontaktelement (70) aufweisen.

8. Hängebahnsystem nach einem der vorhergehenden Ansprüche, wobei bei einem Transportwagen (20), der eine Lasttraverse (22) und zumindest zwei Fahrwerke (24, 26) mit je zwei Laufrollen (28-34) aufweist, eine, zwei, drei oder vier passive Laufrollen gegen antreibbare Laufrollen oder umgekehrt auswechselbar sind.

9. Hängebahnsystem nach einem der vorhergehenden Ansprüche, mit einem I- bzw Doppel-T-Profil-Träger (12) als Lauf- und Tragschiene, wobei die Fahrwerke als Innenläufer ausgebildet sind.

10. Hängebahnsystem nach einem der vorhergehenden Ansprüche, mit einer Photovoltaikanlage, wobei der von der Photovoltaikanlage erzeugte Gleichstrom direkt ohne Gleichrichtung in eine Energieversorgung des Hängebahnsystems eingespeist wird.

11. Hängebahnsystem nach Anspruch 10, mit einem Zwischenspeicher zur Speicherung der von der Photovoltaikanlage erzeugten Energie vor der Weitergabe an das Energieversorgungssystem des Hängebahnsystems.

12. Transportwagen (20) für ein Hängebahnsystem (10) nach einem der vorhergehenden Ansprüche.
